# EUROPEAN PATENT SPECIFICATION

(11) **EP 3 045 730 B1**
(45) Date of publication and mention of the grant of the patent: **28.08.2019**
(21) Application number: 16151905.3
(22) Date of filing: 19.01.2016
(51) Int. Cl.: F04D 29/32, F04D 19/00, F04D 25/08, F04D 29/66

(54) **SHROUDED FAN ROTOR**
GEBLÄSE MIT GEBLÄSEVERKLEIDUNG
VENTILATEUR AVEC VIROLE EXTÉRIEURE CIRCULAIRE

(30) Priority: 19.01.2015 US 201514599829
(43) Date of publication of application: 20.07.2016
(73) Proprietor: Hamilton Sundstrand Corporation, Windsor Locks, CT 06096-1010 (US)
(72) Inventor: CHRABASCZ, Eric, Longmeadow, MA Massachusetts 01106 (US); PRASAD, Dilip, North Granby, CT Connecticut 06060 (US); LOKHANDWALLA, Murtuza, South Windsor, CT Connecticut 06074 (US); HIPSKY, Harold W., Willington, CT Connecticut 06279 (US)
(74) Representative: Dehns

(56) References cited:
- FR-A1- 2 820 176
- JP-A- 2008 163 888
- JP-A- 2010 096 084
- US-A1- 2007 104 581
- US-A1- 2010 086 405
- US-A1- 2012 219 419
- US-A1- 2013 209 242

## Description

### BACKGROUND OF THE INVENTION

The subject matter disclosed herein generally relates to the field of fan rotors and more particularly to shrouded fan rotors.

The subject matter also generally relates to environmental control systems. In particular, the subject matter relates to a ram air fan assembly and fan rotors thereof for environmental control systems for aircraft.

An environmental control system (ECS) aboard an aircraft provides conditioned air to an aircraft cabin. Conditioned air is air at a temperature, pressure, and humidity desirable for aircraft passenger comfort and safety. At or near ground level, the ambient air temperature and/or humidity is often sufficiently high that the air must be cooled as part of the conditioning process before being delivered to the aircraft cabin. At flight altitude, ambient air is often far cooler than desired, but at such a low pressure that it must be compressed to an acceptable pressure as part of the conditioning process. Compressing ambient air at flight altitude heats the resulting pressurized air sufficiently that it must be cooled, even if the ambient air temperature is very low. Thus, under most conditions, heat must be removed from air by the ECS before the air is delivered to the aircraft cabin. As heat is removed from the air, it is dissipated by the ECS into a separate stream of air that flows into the ECS, across heat exchangers in the ECS, and out of the aircraft, carrying the excess heat with it. Under conditions where the aircraft is moving fast enough, the pressure of air ramming into the aircraft is sufficient to move enough air through the ECS and over the heat exchangers to remove the excess heat.

While ram air works well under normal flight conditions, at lower flight speeds, or when the aircraft is on the ground, ram air pressure may be too low to provide enough air flow across the heat exchangers for sufficient heat removal from the ECS. Under these conditions, a fan within the ECS is employed to provide the necessary airflow across the ECS heat exchangers. This fan is called a ram air fan.

US 2013/209242, US 2007/104581 and JP 2010 096084 may be useful in understanding the background of the present disclosure.

### BRIEF DESCRIPTION OF THE INVENTION

According to one aspect of the invention, a fan rotor for an air cycle machine of an aircraft environmental control system is provided as defined in claim 1.

According to another aspect of the invention, a method of manufacturing a fan rotor for an air cycle machine of an aircraft environmental control system is provided as defined in claim 8.

Technical features of the invention include a fan rotor having a shroud that provides improved structural stability and strength to the fan rotor such that failure or damage during surge events may be prevented.

### BRIEF DESCRIPTION OF THE DRAWINGS

The subject matter which is regarded as the invention is particularly pointed out and distinctly claimed in the claims at the conclusion of the specification. The foregoing and other features and advantages are apparent from the following detailed description taken in conjunction with the accompanying drawings in which:
- FIG. 1: is a schematic of a ram air fan unit of an aircraft;
- FIG. 2: is a schematic view of a prior art fan rotor;
- FIG. 3A: is a schematic view of a fan rotor;
- FIG. 3B: is a schematic partial view of the fan rotor of FIG. 3A;
- FIG. 3C: is a schematic partial alternative view of the fan rotor of FIG. 3A;
- FIG. 4: is a process of making a fan rotor.

### DETAILED DESCRIPTION OF THE INVENTION

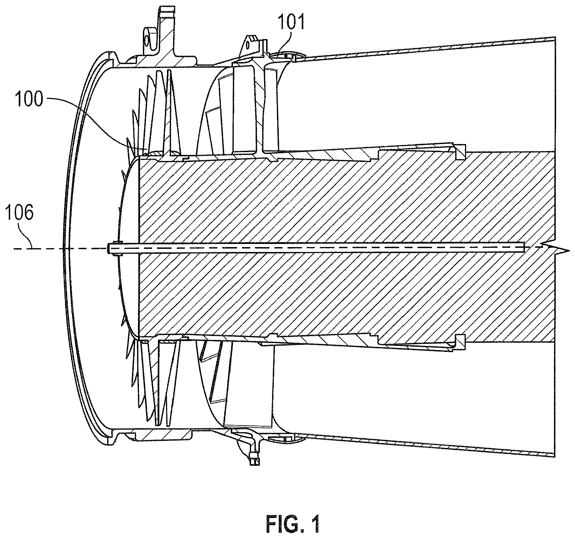

FIG. 1 shows a schematic of a ram air fan 101 having a fan rotor 100. Ram air fan 101 may be configured within an aircraft and used to expel heated air by operation of the fan rotor 100 spinning or rotating to form a fan flow that passes through the ram air fan 101 and out of an aircraft. The fan rotor 100 is configured to rotate about an axis 106. The ram air fan 101 may be configured as part of an air cycle machine and/or part of an environmental control system of an aircraft. The environmental control system may be pneumatic or electric driven.

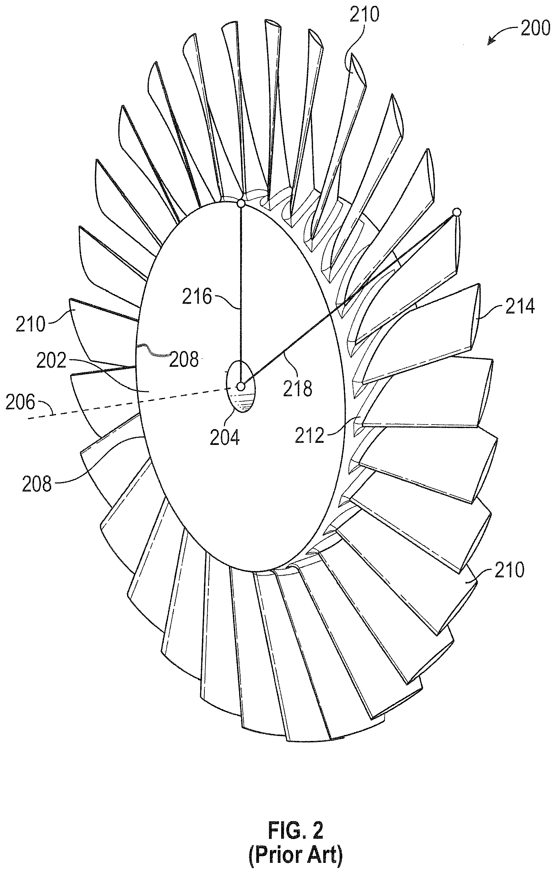

Turning now to FIG. 2, a schematic view of a traditional fan rotor 200 is shown. Fan rotor 200 is formed of a substantially circular central body 202 having an aperture 204 therethrough centered about a central axis 206 and having an edge 208. A plurality of fan blades 210 are configured to extend radially from the edge 208, starting at a base 212 and extending to a free end or tip 214. Central body 202 is configured to be mounted on a rotatable shaft (not shown) or operationally connected to other rotatable elements (not shown) through aperture 204 and about a central axis 206, such as in ram air fan 101 of FIG. 1.

A first radial distance 216 is defined as the radial distance from the central axis 206 of fan rotor 200 to the edge 208 of the central body. Thus, the central body 202 generally defines a circular or disk shape with a radius of 216. A second radial distance 218 is defined as the radial distance from the central axis 206 to the blade tip 214. Thus, the length of the fan blades 210 is the second distance minus the first distance.

Although fan rotor 200 may be configured to operate as a ram air fan for an aircraft environmental control system, such as that shown in FIG. 1; those of skill in the art will appreciate that the fan rotor 200 can be configured to operate in other devices. The fan rotor 200 is relatively simple to manufacture and has been widely used in the aircraft industry.

As noted, the fan blades 210 have free ends at tips 214, and thus the end of the blades are free floating and may be subject to vibrations and stresses. For example, due to operational stresses, the fan blades 210 may fail during a surge event. A surge event may occur when there is a blockage upstream of the fan within the system, such as in a partially blocked heat exchanger in an environmental control system of an aircraft, which may result in increased stresses within the system. Thus, the stresses imposed on the fan rotor 200 are increased, and specifically the stresses imposed on the fan blades 210 are increased, which can result in failure, damage, or breaking of the fan blades 210.

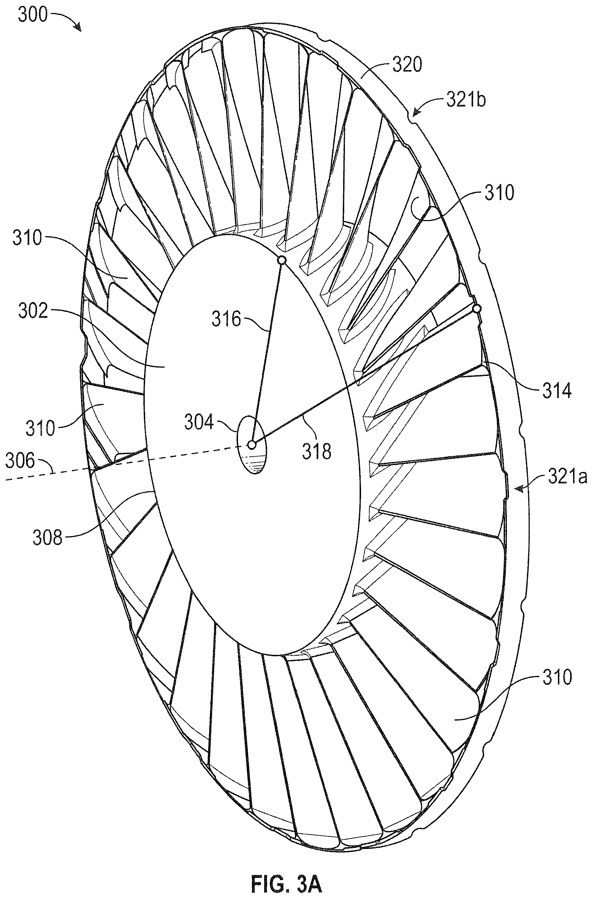

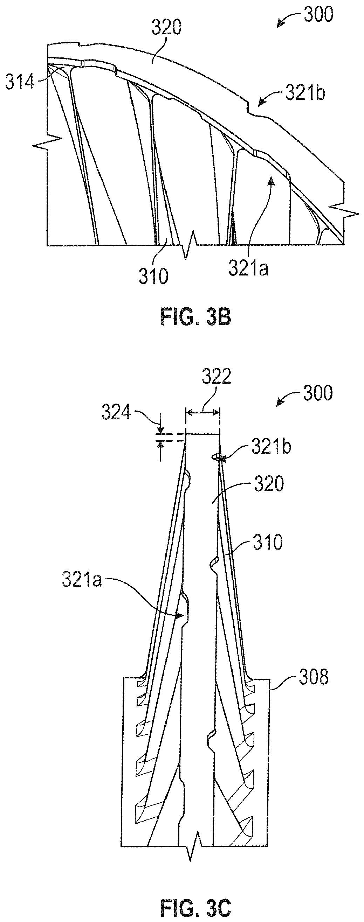

Turning now to FIGS. 3A, 3B, and 3C, a fan rotor 300 is shown. As shown in FIG. 3A, fan rotor 300 has a similar configuration as fan rotor 200 of FIG. 2, thus similar features are presented with similar reference numbers but preceded by a "3" rather than a "2." Thus, fan rotor 300 includes a substantially circular central body 302 with a plurality of fan blades 310 extending radially from an edge 308 thereof. In the embodiment of FIGS. 3A-3C, in contrast to the fan rotor 200 of FIG. 2, fan rotor 300 includes a shroud 320 that extends circumferentially around the fan rotor 300 and connects each of the fan blades 310. For example, the shroud 320 may be formed of the same material as the fan blades 310 and rigidly connect each of the fan blades 310. In some embodiments, fan rotor 300, and other configurations/embodiments, may be employed as ram fans for environmental control systems of aircraft, and may compose fan rotors for air cycle machines and/or electric powered ram fans, for example.

Shroud 320, as shown in FIG. 3A, is located at a distance 318 from the central axis 306. That is, as shown, shroud 320 is located at the tips 314 of the blades 310, and thus rigidly connects each tip 314 of each blade 310 of fan rotor 300. However, those of skill in the art will appreciate that the radial location of the shroud 320 is not required to be located at the radial distance 318. For example, in some embodiments, the shroud 320 may be located at a third distance that is any radial distance between the first distance 316 and the second distance 318 and extend circumferentially around the fan rotor 300 such that each blade 310 of the fan rotor 300 is connected.

Further, in some embodiments, the shroud 320 does not need to be uniform in its construction and/or configuration. For example, as shown in FIGS. 3A-3C, the shroud 320 may include one or more impeller tuning features 321a, 321b. The impeller tuning features 321a, 321b, as shown in FIGS. 3A-3C are configured as indents or removed material from the axial profile of the shroud 320. Such features may be provided in a repeating pattern or may be configured in other ways. For example, as shown, the impeller tuning features 321a, 321b may be formed on both sides (axially) of the shroud 320. The tuning feature(s) 321a, 321b enable various parts of the axial thickness of the shroud 320 may be varied. This variance in axial thickness may lead to a mistuning of the fan rotor 300 during operation. Specifically, an asymmetry of the axial thickness of the shroud 320 can ensure that the vibrations of each of the fan blades 310 do not ring in unison, and thus prevent the fan rotor 300 from vibrating at a single frequency.

In the embodiment of FIGS. 3A-3C, the tuning feature 321a is larger circumferentially than the tuning feature 321b. The configuration, shape, dimension, geometry, thickness, etc. of the tuning features may be optimized for a particular application. For example, the tuning features may: all be similar or identical; located on only one axial side of the rotor; form aerodynamic shapes; extend axially as protrusions; etc. As such, those of skill in the art will appreciate that the tuning features are not limited by the present description.

According to the invention, the radial thickness of the tuning feature of the shroud is varied. A thicker shroud, whether thicker in a radial or axial direction, will provide more material and thus rigidity between the fan blades. However, the additional material will add more weight to the fan rotor, and thus a trade-off may be made depending on the design and needs of the particular fan rotor. In some embodiments, the radial and axial thickness of the shroud is varied to form the tuning feature. In some embodiments that include a varying axial thickness, the tuning feature may be formed with an undulating form or contour along the circumference of the shroud. In some embodiments the contour or shape of the tuning feature may be configured with a repeating pattern or wave pattern. For example, the tuning feature may be formed as a wave pattern or frequency around the circumference of the shroud with the pattern of frequency defining the axial thickness of the shroud.

For example, with reference to FIG. 3C, shroud 320 is shown with a radial position at distance 318 and having an axial thickness of 322. The axial thickness 322, as shown in FIG. 3C, is a substantially uniform thickness at points not having a tuning feature 321a, 321b and, at this uniform thickness, is configured to be the axial length of the blade tip 314 at the outer-most edge. The radial thickness 324 may also be substantially uniform in thickness throughout the circumference of shroud 320. However, as noted, various alternative embodiments may have varying thicknesses at various points, in the radial thickness and/or the axial thickness. In some embodiments, the radial thickness 324 of shroud 320 may be about 2.54 mm (0.1 inches) on an about 228.6 mm (9.0 inch) rotor fan 300, i.e., the second distance 218 may be about 228.6 mm (9. 0 inches). In some embodiments with a varying thickness, the shroud may have a radial thickness, for example, ranging from about 1.016 mm (0.040 inches) to about 10.16 mm (0.400 inches).

Advantageously, in embodiments that include a tuning feature with a frequency pattern formed in the shroud, either radially or axially, a mistuning of the fan rotor during operation may be provided. Specifically, an asymmetry of the thickness of the shroud can ensure that the vibrations of each of the fan blades do not ring in unison, and thus prevent the fan rotor from vibrating at a single frequency. It is advantageous to prevent vibration at a single frequency because such vibrations may result in additional stress on and/or failure of the blades. The single frequency is prevented, in part, because of an asymmetric distribution of weight around the fan rotor. Thus, while still providing structural strengthening by connecting each of the fan blades of the fan rotor, the variations in thicknesses can be configured to prevent undesirable frequency vibrations within the rotor and blades thereof.

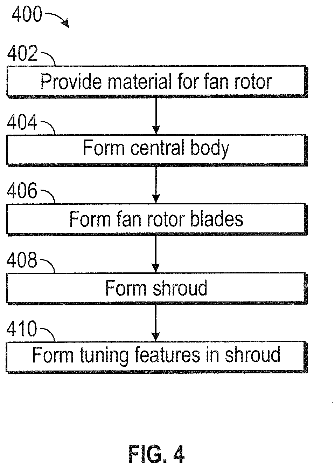

Turning now to FIG. 4, a process 400 for manufacturing a fan rotor is shown. At step 402 bar stock or similar stock is provided for milling, machining, forging, etc. At step 404 a central body is formed by the selected and/or desired processing, leaving formed central plate out to a first distance, as discussed above. Between the first distance and the second distance will be a solid sheet of material that must now be formed to form the blades of the fan rotor.

At step 406 material is removed, by known methods, from the stock between the first distance, defined as a distance from a central axis to the edge of the central body, and a second distance, defined as a distance from the central axis to the outer rim of the fan rotor, i.e., the fan blade tips, to form the fan blades. At step 408 a shroud is formed on the fan rotor. The shroud may be formed at the second distance (i.e., at the terminal edge of the fan blades), or at some third distance that is between the first distance and the second distance. At step 410, the shroud may be modified to have variable thicknesses in the radial, axial, and/or circumferential directions, i.e., to form one or more tuning features. Process 400 thus may form a fan rotor similar to that shown in FIGS. 3A-3C with a shroud connecting each of the fan blades, and a tuning feature formed as part of the shroud.

Although process 400 is described as a sequence of steps, those of skill in the art will appreciate that the order of steps is not restricted to that presented above. For example, the machining may all occur at once, and thus steps 404-410 may occur simultaneously, without departing from the scope of the invention. Further, in some embodiments, the steps may be performed in a different order as presented above, or various sub-combinations of steps may be performed simultaneously, without departing from the scope of the invention.

Advantageously, in accordance with various embodiments of the invention, a shrouded fan rotor can significantly reduce the cyclic stress during a surge event, thus prolonging the life of the fan rotor and reducing the need to service or perform maintenance thereon. Specifically, embodiments of the invention may provide a fan rotor that can survive surge events without damage being done to the fan rotor.

Furthermore, advantageously, providing a shroud increases the weight of the fan rotor and thus can push the frequency of modes of operation of the fan rotor out of fan operating speed ranges. For example, the addition of the shroud, due to the weight and the structural integrity, may enable a fan rotor to operate at higher speeds than traditional fan rotors.

Moreover, advantageously, in accordance with various embodiments, varying the construction of the shroud may provide additional and/or alternative advantages. For example, by providing a pattern of frequency in the shape of the shroud, either in terms of axially thickness or radial thickness, may enable a mistuning of the fan rotor to thus prevent the rotor from operating at specific frequencies that may enable damage to occur to the blades and/or the rotor fan.

While only a limited number of embodiments have been described, it should be readily understood that they do not define the invention and that the invention is thus not limited to such disclosed embodiments. Additionally, while various embodiments have been described, it is to be understood that the invention may include only some of the described embodiments and/or features.

For example, although shown in FIGS. 3A-3C with the shroud located at the outer diameter of the fan rotor, those of skill in the art will appreciate that various embodiments may have the location of the shroud at a radial distance from the central axis that is less than the outer diameter, and still connect each of the blades. For example, each blade may be formed and welded or otherwise connected to a central body that is separate therefrom at the time of formation. Further, for example, the shroud may be welded to or otherwise connected to the blades of the fan rotor to provide similar advantages as described above.

Accordingly, the invention is not to be seen as defined or limited by the foregoing description, but the invention is only defined by the appended claims.

## Claims

1. A fan rotor (300) for an air cycle machine of an aircraft environmental control system comprising:
a central body (302) defining a central axis (306) and a radius having a first radial distance (316) that is defined as a distance from the central axis (306) to an edge (308) of the central body (302);
a plurality of fan blades (310) extending radially from the edge (308) of the central body (302) to a second radial distance (318), the second radial distance (318) defined as a distance from the central axis (302) to a tip (314) of the fan blades (310); and
a shroud (320) extending circumferentially between and connecting each of the plurality of fan blades (310), the shroud (320) located at a radial distance from the central axis (306) that is greater than the first radial distance (316), wherein the
shroud (320) comprises one or more tuning features (321a,321b) configured to mistune a vibration of the fan rotor (300) during operation, wherein one tuning feature is a pattern of frequency in the shape of the shroud in terms of axial or radial thickness,
**characterized in that**:
at least one tuning feature is a pattern of frequency in the shape of the shroud in terms of radial thickness, and the central body (302), the fan blades (310), and the shroud (320) are all formed from a single stock of material.

2. The fan rotor of claim 1, wherein the radial distance of the location of the shroud (320) is equal to the second radial distance (318).

3. The fan rotor of claim 1 or 2, wherein the one or more tuning features (321a,321b) define a varying axial thickness of the shroud around the circumferential extent of the shroud.

4. The fan rotor of claim 3, wherein the varying axial thickness around the circumferential extent of the shroud (320) defines a repeating wave pattern of thicknesses.

5. The fan rotor of any of claims 1 to 4, wherein the varying radial thickness (324) of the shroud (320) at the tuning features defines a thickness between 1.016 mm (0.040 inches) and 10.16 mm (0.400 inches) in the radial direction.

6. The fan rotor of any of claims 1 to 5, wherein the central body (302) is configured to operationally attach to a portion of an air cycle machine.

7. The fan rotor of claim 6, wherein the air cycle machine is part of an environmental control system of an aircraft.

8. A method of manufacturing a fan rotor (300) for an air cycle machine of an aircraft environmental control system, the fan rotor comprising a central body (302), a plurality of fan blades (310), a shroud (320) and one or more tuning features (321a, 321b), the method comprising:
providing a single stock of material for forming the entire fan rotor;
forming the central body (302) of the fan rotor (300) from the single stock of material, the central body (302) defining a central axis (306) and a radius (316) having a first radial distance that is defined as a distance from the central axis (306) to an edge (308) of the central body (302);
removing material to form the plurality of fan blades (310) extending radially from the edge (308) of the central body (302) to a second radial distance (318) defined as a distance from the central axis (306) to a tip (314) of the fan blades (310);
forming the shroud (320) that extends circumferentially between and connects each of the plurality of fan blades (310), the shroud (320) located at a radial distance from the central axis (306) that is greater than the first radial distance (308); and
forming the one or more tuning features (321a,321b) in the shroud (320), the one or more tuning features (321a,321b) configured to mistune a vibration of the fan rotor during operation, wherein one tuning feature is a pattern of frequency in the shape of the shroud in terms of axial or radial thickness, and wherein at least one tuning feature is a pattern of frequency in the shape of the shroud in terms of radial thickness.

9. The method of claim 8, wherein the shroud (320) is formed at a radial distance that is equal to second radial distance (318).

10. The method of claim 8 or 9, wherein the one or more tuning features (321a,321b) are formed with a varying axial thickness around the circumferential extent of the shroud.

11. The method of claim 10, wherein the varying axial thickness around the circumferential extent of the shroud (320) defines a repeating wave pattern of thicknesses.

12. The method of any of claims 8 to 11, wherein the varying radial thickness (324) of the shroud (320) at the tuning features is formed with a thickness between 1.016 mm (0.040 inches) and 10.16 mm (0.400 inches) in the radial direction.

13. The method of any of claims 8 to 12, wherein the central body (302) is formed to operationally attach to a portion of an air cycle machine.

14. The fan rotor of any one of claims 1 to 7, wherein the pattern of frequency is a repeating pattern or wave pattern.

15. The method of any one of claims 8 to 13, wherein the pattern of frequency is a repeating pattern or wave pattern.

## Patentansprüche

1. Gebläserotor (300) für eine Luftkreislaufmaschine eines Umgebungskontrollsystems in Flugzeugen, Folgendes umfassend:
einen Mittelkörper (302), der eine Mittelachse (306) und einen Radius definiert, der einen ersten Radialabstand (316) aufweist, der als ein Abstand von der Mittelachse (306) zu einer Kante (308) des Mittelkörpers (302) definiert ist;
eine Vielzahl von Gebläseschaufeln (310), die sich radial von der Kante (308) des Mittelkörpers (302) zu einem zweiten radialen Abstand (318) erstrecken, wobei der zweite radiale Abstand (318) als ein Abstand von der Mittelachse (302) zu einer Spitze (314) der Gebläseschaufeln (310) definiert ist, und
eine Gebläseverkleidung (320), die sich in Umfangsrichtung zwischen der Vielzahl von Gebläseschaufeln (310) erstreckt und jede von ihnen verbindet, wobei sich die Gebläseverkleidung (320) in einem radialen Abstand von der Mittelachse (306) befindet, der größer als der erste radiale Abstand (316) ist, wobei die Gebläseverkleidung (320) eine oder mehrere Abstimmungsmerkmale (321a, 321b) beinhaltet, die dazu konfiguriert sind, eine Schwingung des Gebläserotors (300) beim Betrieb falsch abzustimmen, wobei ein Abstimmungsmerkmal ein Frequenzmuster in der Form der Gebläseverkleidung in Bezug auf axiale oder radiale Dicke ist, **dadurch gekennzeichnet, dass**
mindestens eines der Abstimmungsmerkmale ein Frequenzmuster in Form der Gebläseverkleidung in Bezug auf radiale Dicke ist, und
der Mittelkörper (302), die Gebläseschaufeln (310) und die Gebläseverkleidung (320) sämtlich aus einem einzigen Materialbestand gebildet sind.

2. Gebläserotor nach Anspruch 1, wobei der radiale Abstand des Standorts der Gebläseverkleidung (320) gleich dem zweiten radialen Abstand (318) ist.

3. Gebläserotor nach Anspruch 1 oder 2, wobei das eine oder die mehreren Abstimmungsmerkmale (321a, 321b) eine variierende axiale Dicke der Gebläseverkleidung um die Umfangserstreckung der Gebläseverkleidung definieren.

4. Gebläserotor nach Anspruch 3, wobei die variierende axiale Dicke um die Umfangserstreckung der Gebläseverkleidung (320) ein sich wiederholendes Dickenwellenmuster definiert.

5. Gebläserotor nach einem der Ansprüche 1 bis 4, wobei die sich variierende radiale Dicke (324) der Gebläseverkleidung (320) an den Abstimmungsmerkmalen eine Dicke zwischen 1,016 mm (0,040 Zoll) und 10,16 mm (0,400 Zoll) in die radiale Richtung definiert.

6. Gebläserotor nach einem der Ansprüche 1 bis 5, wobei der Mittelkörper (302) dazu konfiguriert ist, sich betriebsmäßig mit einem Abschnitt einer Luftkreislaufmaschine zu verbinden.

7. Gebläserotor nach Anspruch 6, wobei die Luftkreislaufmaschine Teil eines Umgebungskontrollsystems eines Flugzeugs ist.

8. Verfahren zum Herstellen eines Gebläserotors (300) für eine Luftkreislaufmaschine eines Umgebungskontrollsystems eines Flugzeugs, wobei der Gebläserotor einen Mittelkörper (302), eine Vielzahl von Gebläseschaufeln (310), eine Gebläseverkleidung (320) und ein oder mehrere Abstimmungsmerkmale (321a, 321b) umfasst, wobei das Verfahren Folgendes umfasst:
Bereitstellen eines einzigen Materialbestands zum Bilden des gesamten Gebläserotors;
Bilden des Mittelkörpers (302) des Gebläserotors (300) aus dem einzigen Materialbestand, wobei der Mittelkörper (302) eine Mittelachse (306) und einen Radius (316) definiert, der einen ersten radialen Abstand aufweist, der als ein Abstand von der Mittelachse (306) zu einer Kante (308) des Mittelkörpers (302) definiert ist;
Entfernen von Material zum Bilden der Vielzahl von Gebläseschaufeln (310), die sich radial von der Kante (308) des Mittelkörpers (302) zu einem zweiten radialen Abstand (318) erstrecken, der als ein Abstand von der Mittelachse (306) zu einer Spitze (314) der Gebläseschaufeln (310) definiert ist;
Bilden einer Gebläseverkleidung (320), die sich in Umfangsrichtung zwischen der Vielzahl von Gebläseschaufeln (310) erstreckt und jede von ihnen verbindet, wobei sich die Gebläseverkleidung (320) in einem radialen Abstand von der Mittelachse (306) befindet, der größer als der erste radiale Abstand (308) ist; und
Bilden des einen oder der mehreren Abstimmungsmerkmale (321a, 321b) in der Gebläseverkleidung (320), wobei das eine oder die mehreren Abstimmungsmerkmale (321a, 321b) dazu konfiguriert sind, eine Schwingung des Gebläserotors (300) beim Betrieb falsch abzustimmen, wobei ein Abstimmungsmerkmal ein Frequenzmuster in der Form der Gebläseverkleidung in Bezug auf axiale oder radiale Dicke ist, und wobei mindestens ein Abstimmungsmerkmal ein Frequenzmuster in Form der Gebläseverkleidung in Bezug auf radiale Dicke ist.

9. Verfahren nach Anspruch 8, wobei die Gebläseverkleidung (320) an einem radialen Abstand gebildet ist, der gleich dem zweiten radialen Abstand (318) ist.

10. Verfahren nach Anspruch 8 oder 9, wobei das eine oder die mehreren Abstimmungsmerkmale (321a, 321b) mit variierender axialer Dicke um die Umfangserstreckung der Gebläseverkleidung gebildet sind.

11. Verfahren nach Anspruch 10, wobei die variierende axiale Dicke um die Umfangserstreckung der Gebläseverkleidung (320) ein sich wiederholendes Dickenwellenmuster definiert.

12. Verfahren nach Anspruch 8 bis 11, wobei die sich variierende radiale Dicke (324) der Gebläseverkleidung (320) an den Abstimmungsmerkmalen eine Dicke zwischen 1,016 mm (0,040 Zoll) und 10,16 mm (0,400 Zoll) in die radiale Richtung definiert.

13. Verfahren nach Anspruch 8 bis 12, wobei der Mittelkörper (302) dazu konfiguriert ist, sich betriebsmäßig mit einem Abschnitt einer Luftkreislaufmaschine zu verbinden.

14. Gebläserotor nach einem der Ansprüche 1 bis 7, wobei das Frequenzmuster ein sich wiederholendes Muster oder Wellenmuster ist.

15. Verfahren nach einem der Ansprüche 8 bis 13, wobei das Frequenzmuster ein sich wiederholendes Muster oder Wellenmuster ist.

## Revendications

1. Rotor de ventilateur (300) pour une machine à cycle d'air d'un système de climatisation d'un aéronef comprenant :
un corps central (302) définissant un axe central (306) et un rayon ayant une première distance radiale (316) définie comme étant une distance de l'axe central (306) à un bord (308) du corps central (302) ;
une pluralité de pales de ventilateur (310) s'étendant radialement du bord (308) du corps central (302) à une seconde distance radiale (318), la seconde distance radiale (318) étant définie comme étant une distance de l'axe central (302) à un bout (314) des pales du ventilateur (310) ; et
une virole (320) s'étendant de manière circonférentielle entre et reliant chacune de la pluralité de pales de ventilateur (310), la virole (320) étant située à une distance radiale de l'axe central (306) supérieure à la première distance radiale (316), dans lequel la virole (320) comprend une ou plusieurs caractéristiques de réglage (321a, 321b) configurées pour désaccorder une vibration du rotor de ventilateur (300) pendant le fonctionnement, dans lequel une caractéristique de réglage est un motif de fréquence ayant la forme de la virole en termes d'épaisseur axiale ou radiale, **caractérisé en ce que** :
au moins une caractéristique de réglage est un motif de fréquence ayant la forme de la virole en termes d'épaisseur radiale, et le corps central (302), les pales de ventilateur (310) et la virole (320) sont tous formés à partir d'un seul lot de matériau.

2. Rotor de ventilateur selon la revendication 1, dans lequel la distance radiale de l'emplacement de la virole (320) est égale à la seconde distance radiale (318).

3. Rotor de ventilateur selon la revendication 1 ou 2, dans lequel la ou les plusieurs caractéristiques de réglage (321a, 321b) définissent une épaisseur axiale variable de la virole autour de l'étendue circonférentielle de la virole.

4. Rotor de ventilateur selon la revendication 3, dans lequel l'épaisseur axiale variable autour de l'étendue circonférentielle de la virole (320) définit un motif d'épaisseurs ondulé répétitif.

5. Rotor de ventilateur selon l'une quelconque des revendications 1 à 4, dans lequel l'épaisseur radiale variable (324) de la virole (320) au niveau des caractéristiques de réglage définit une épaisseur comprise entre 1,016 mm (0,040 pouce) et 10,16 mm (0,400 pouce) dans la direction radiale.

6. Rotor de ventilateur selon l'une quelconque des revendications 1 à 5, dans lequel le corps central (302) est configuré pour se fixer de manière opérationnelle à une partie d'une machine à cycle d'air.

7. Rotor de ventilateur selon la revendication 6, dans lequel la machine à cycle d'air fait partie d'un système de climatisation d'un aéronef.

8. Procédé de fabrication d'un rotor de ventilateur (300) pour une machine à cycle d'air d'un système de climatisation d'aéronef, le rotor de ventilateur comprenant un corps central (302), une pluralité de pales de ventilateur (310), une virole (320) et une ou plusieurs caractéristiques de réglage (321a, 321b), le procédé comprenant :
la fourniture d'un seul lot de matériau pour former le rotor de ventilateur tout entier ;
la formation du corps central (302) du rotor de ventilateur (300) à partir du seul lot de matériau, le corps central (302) définissant un axe central (306) et un rayon (316) ayant une première distance radiale définie comme étant une distance de l'axe central (306) à un bord (308) du corps central (302) ;
le retrait de matériau pour former la pluralité de pales de ventilateur (310) s'étendant radialement du bord (308) du corps central (302) à une seconde distance radiale (318) définie comme étant une distance de l'axe central (306) à un bout (314) des pales du ventilateur (310) ;
la formation de la virole (320) qui s'étend circonférentiellement entre et qui relie chacune de la pluralité de pales de ventilateur (310), la virole (320) étant située à une distance radiale de l'axe central (306) supérieure à la première distance radiale (308) ; et
la formation de la ou des plusieurs caractéristiques de réglage (321a, 321b) dans la virole (320), la ou les plusieurs caractéristiques de réglage (321a, 321b) étant configurées pour désaccorder une vibration du rotor du ventilateur pendant le fonctionnement, dans lequel une caractéristique de réglage est un motif de fréquence ayant la forme de la virole en termes d'épaisseur axiale ou radiale, et dans lequel au moins une caractéristique de réglage est un motif de fréquence ayant la forme de la virole en termes d'épaisseur radiale.

9. Procédé selon la revendication 8, dans lequel la virole (320) est formée à une distance radiale égale à la seconde distance radiale (318).

10. Procédé selon la revendication 8 ou 9, dans lequel la ou les caractéristiques de réglage (321a, 321b) sont formées avec une épaisseur axiale variable autour de l'étendue circonférentielle de la virole.

11. Procédé selon la revendication 10, dans lequel l'épaisseur axiale variable autour de l'étendue circonférentielle de la virole (320) définit un motif d'épaisseurs ondulé répétitif.

12. Procédé selon l'une quelconque des revendications 8 à 11, dans lequel l'épaisseur radiale variable (324) de la virole (320) au niveau des caractéristiques de réglage est formée avec une épaisseur comprise entre 1,016 mm (0,040 pouce) et 10,16 mm (0,400 pouce) dans la direction radiale.

13. Procédé selon l'une quelconque des revendications 8 à 12, dans lequel le corps central (302) est formé pour se fixer de manière opérationnelle à une partie d'une machine à cycle d'air.

14. Rotor de ventilateur selon l'une quelconque des revendications 1 à 7, dans lequel le motif de fréquence est un motif répétitif ou un motif ondulé.

15. Procédé selon l'une quelconque des revendications 8 à 13, dans lequel le motif de fréquence est un motif répétitif ou un motif ondulé.
